# FASCICULE DE BREVET EUROPEEN

(11) **EP 0 615 381 B1**
(45) Date de publication et mention de la délivrance du brevet: **19.05.1999**
(21) Numéro de dépôt: 94400496.9
(22) Date de dépôt: 08.03.1994
(51) Int. Cl.: H04N 5/445, H04N 5/76

(54) **Modifications des attributs couleur pour des zones différentes de matrices de pixels représentant des caractères à insérer dans un signal vidéo couleur**
Änderung der Farbattribute für verschiedene Zonen von Bildpunktmatrizen von in ein Farb-Videosignal einzufügenden Textzeichen
Modification of colour attributes for different zones of pixel matrices representing caracters to be inserted into a colour video signal

(30) Priorité: 12.03.1993 FR 9302868
(43) Date de publication de la demande: 14.09.1994
(73) Titulaire: THOMSON multimedia, 92648 Boulogne Cédex (FR)
(72) Inventeur: Queinnec, Olivier, F-92402 Courbevoie Cedex (FR)
(74) Mandataire: Ruellan-Lemonnier, Brigitte

(56) Documents cités:
- GB-A- 2 107 954

## Description

La présente invention se rapporte à un procédé de codage de couleurs de caractères d'un texte inséré dans une image vidéo ou d'un texte remplaçant l'image vidéo normale. L'invention se rapporte également à un dispositif de génération de caractères mettant en oeuvre ce procédé.

Il existe sur le marché de nombreux circuits intégrés de génération de caractères destinés à des appareils traitant des signaux vidéo, tels que magnétoscopes, lecteurs de disques laser vidéo ou encore décodeurs de chaînes cryptées. Dans beaucoup de cas, ces circuits élaborent des signaux RGB correspondant au texte à afficher, ces signaux étant ensuite insérés dans les signaux RGB correspondant à un programme quelconque. Selon un autre mode de fonctionnement, ces circuits élaborent des signaux vidéo complets remplaçant le signal vidéo d'entrée. Lorsque les circuits de génération sont compris dans le récépteur de télévision, les signaux résultants sont transmis directement aux circuits du tube cathodique ou d'un autre organe d'affichage. Lorsque les circuits de génération sont compris dans un appareil périphérique du récepteur, les signaux RGB correspondant soit au texte, soit à une image avec texte incrusté, soit à une page comprenant uniquement du texte sont transmis au récepteur par l'intermédiaire d'une prise dédiée, par exemple une prise SCART.

Or, de nombreux téléviseurs, notamment hors Europe, ne comportent pas une telle prise ou un équivalent de celle-ci. Pour transmettre un signal au téléviseur, il faudra en conséquence passer par exemple par une prise antenne dudit téléviseur. Il sera donc nécessaire de coder le signal RGB selon un standard particulier: PAL, SECAM, NTSC pour ne citer que les principaux standards de vidéo composite.

Un texte présente des transitions de couleur très rapides, contrairement à une image de télévision habituelle. Si l'on considère un largeur de trait de caractère minimale d'un élément-image ("pixel"), la bande passante de chrominance obtenue avoisine les 4 MHz. Si une telle valeur ne pose pas de problèmes majeurs pour des signaux RGB, il en est tout autrement lorsqu'il devient nécéssaire de coder ces signaux selon un standard particulier: pour le PAL et le SECAM, la bande passante de la chrominance est limitée à 1,5 MHz. Il en est de même lors d'un codage sous forme de signaux Y/C.

Un premier défaut apparaissant à l'écran est dû à la rapidité des transitions de couleur en soi. En effet, le téléviseur soumet la chrominance et la luminance à des traitements différents. Les délais générés ne sont pas identiques, et une ligne de retard est généralement prévue pour compenser la différence de délai. Si la précision de ladite ligne de retard est suffisante pour une image habituelle, elle ne l'est plus pour un texte. Luminance et chrominance apparaîtront de manière déphasée à l'écran.

Deux autres défauts sont dûs à la limitation de la bande passante de la chrominance lors du codage du signal: on observe des bavures de couleurs ainsi que de fausses couleurs.

De tels problèmes ont été reconnus dans le document GB-A-2 107 954. Ce document divulgue une solution utilisant un filtrage et une compensation de phase.

Un circuit de génération de caractères habituel possède une mémoire morte ("ROM") dans laquelle sont stockés les modèles des caractères disponibles. Un caractère est représenté sous la forme d'une matrice, chaque intersection représentant un pixel. Lorsqu'on désire simplement distinguer entre le fond de caractère ("character background") et la forme du caractère ("character foreground"), une matrice à deux dimensions est suffisante. Néanmoins, on peut aussi vouloir coder une bordure de caractère ou un autre type de zone. Suivant le nombre de zones à distinguer, on augmentera le nombre de bits de codage pour chaque pixel. La matrice sera alors à trois dimensions.

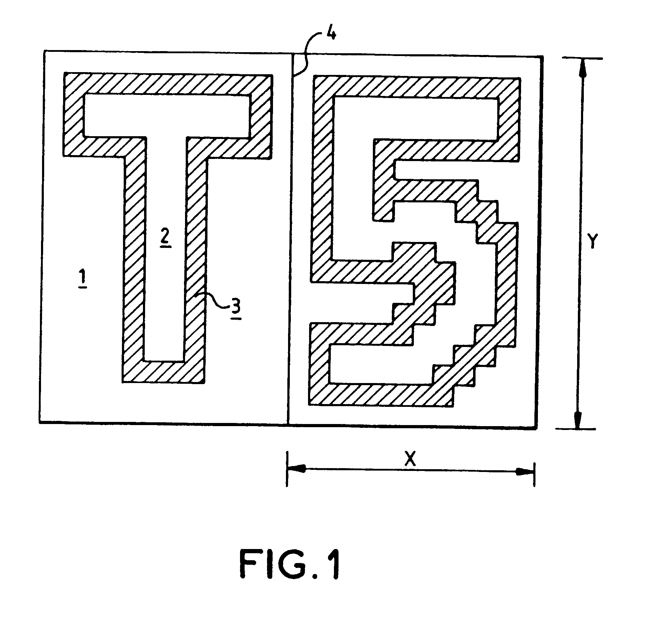

Deux exemples de caractères sont donnés à la figure 1. Chaque caractère est représenté par une matrice de 12 pixels (abscisse X) et 18 lignes (ordonnée Y). On notera la présence de trois zones distinctes: le fond 1, la forme 2 et la bordure 3. Il faudra donc 2 bits pour coder chaque pixel.

Selon un autre mode de réalisation connu, la zone de bordure est déterminée par un circuit de détection de contour, utilisant un algorithme de détection de type connu. La ROM ne contiendra alors que des modèles à deux zones, la troisième zone étant calculée à partir des autres. Ceci a l'avantage de pouvoir réduire la taille de la ROM. Néanmoins, 2 bits par pixel seront toujours nécéssaires à la sortie du circuit de détection de contour.

L'apparence des caractères à l'écran est régie par des paramètres habituellement appelés des attributs. Un attribut peut par exemple concerner la couleur d'une des zones des modèles de caractères définies précédemment. On distingue dans le cas présent entre attributs de page, de rangée et de caractère. Un attribut de page est dit de bas niveau, en ce sens qu'il suffit de changer cet attribut pour changer l'apparence de toute la page de texte, tandis qu'un attribut de caractère est dit de haut niveau, en ce sens qu'il est modifiable indépendamment pour chaque caractère. Il apparaît immédiatement que plus le niveau d'un attribut est haut, plus le coût en mémoire vive ("RAM") est élevé.

Généralement, pour des raisons de prix de revient, les couleurs du fond et de la bordure de caractère sont des attributs de page, tandis que la couleur de la forme est un attribut de caractère. La couleur du fond de caractère est donc identique pour tous les caractères affichés, c'est à dire pour toute la page, tandis que la couleur de la forme de chaque caractère peut varier de caractère en caractère.

Lorsqu'un signal CVBS ou Y/C doit être élaboré, on imposera une limitation des transitions de couleur en vue de limiter l'apparition des défauts de chrominance mentionnés.

Une solution employée consiste à donner la même couleur à toutes les zones de tous les caractères. Le texte entier sera monochrome. On distinguera les zones des caractères par leur luminance différente, cette luminance étant élaborée indépendamment de la chrominance à partir du modèle de caractère. Une page de texte possédera par exemple un fond vert foncé, tandis que toutes les bordures et toutes les formes seront de couleur vert clair.

Une autre solution consiste à limiter le choix des couleurs au noir et au blanc ou à des niveaux de gris.

Dans les deux cas, les possibilités véritables du circuit sont sous-utilisées, surtout en comparaison avec les possibilités du coloriage RGB.

L'invention a pour but de permettre une meilleure utilisation des possibilités de coloriage des caractères, ceci avec un coût additionnel négligeable et une réduction ou une élimination des défauts de chrominance.

L'invention a pour objet un procédé de codage de couleurs de caractères dans un système vidéo selon la revendication 1.

Selon un mode de réalisation préférentiel, ledit attribut de couleur est l'attribut de plus haut niveau. Ceci permet le plus grand choix possible de couleurs pour un coût minimum de mémoire.

On augmente donc de façon artificielle le niveau des attributs de plus bas niveau ou de niveau égal.

Par conséquent, pour un caractère donné, les couleurs de fond, de bordure et de forme sont identiques. Par contre, si l'attribut de plus haut niveau est un attribut de caractère, il sera possible de choisir une couleur différente pour chaque caractère. On obtiendra par conséquent une mosaïque plus ou moins colorée de caractères. Visuellement, la distinction entre les différentes zones d'un même caractère se fera par attribution d'au moins deux niveaux de luminance différents aux zones du modèle de caractère.

Les limitations du point de vue du choix des couleurs sont donc beaucoup moins restrictives que dans les solutions proposées dans l'art antérieur. La seule contrainte, en l'occurence l'imposition d'une couleur unique pour toutes les zones d'un même caractère, a pour effet d'éliminer les défauts de chrominance à l'intérieur de ce caractère. Il peut subsister des défauts au niveau de la frontière entre deux caractères , si la couleur choisie n'est pas la même dans les deux cas (Voir la référence 4 de la figure 1). Cependant, ces défauts sont beaucoup moins gênants dans la mesure où ils sont parfaitement alignés verticalement.

Selon un mode de réalisation particulier de l'invention, l'attribut de couleur dont la valeur est imposée aux autres attributs est un attribut de rangée. Dans ce cas, les défauts de chrominance au niveau des frontières entre caractères disparaîtront également, la couleur étant la même pour toute une rangée de caractères.

Lorsque l'attribut de couleur dont la valeur est imposée aux autres attributs est un attribut de caractère, il est bien sûr possible de choisir les mêmes valeurs de cet attribut pour toute une ligne. Dans ce cas, comme dans le cas d'un attribut de rangée, une rangée entière de caractères aura la même couleur.

Il suffit donc, pour la mise en oeuvre de l'invention, que l'attribut de couleur de forme soit un attribut de rangée ou de caractère pour qu'un choix amélioré des couleurs soit possible par rapport à l'art antérieur. En clair, cela implique que l'on réserve dans une mémoire vive appropriée, pour chaque rangée de caractères ou chaque caractère, assez de mémoire pour stocker une valeur correspondant à cet attribut. Lors de l'affichage d'un caractère selon le procédé conforme à l'invention, les circuits de codage de la chrominance ne tiendront compte que de cet attribut de forme et donneront la même valeur aux autres attributs de couleur (de fond, de bordure ou autre).

Il est particulièrement avantageux et simple d'implémenter le procédé conforme à l'invention dans un dispositif élaborant aussi des signaux RGB. En effet, si ledit dispositif implémente déjà un attribut de couleur de forme de niveau caractère ou rangée, aucune mémoire vive supplémentaire n'est nécéssaire.

Il est bien évident que l'invention s'applique aussi dans le cas où le modèle de caractère ne comporte pas de bordure, mais seulement un fond et une forme.

Selon un mode d'application particulier, le procédé conforme à l'invention est mis en oeuvre lorsque les signaux vidéo doivent être codés suivant un standard dont la largeur de la bande passante de chrominance est telle qu'elle peut provoquer des défauts visibles de chrominance.

Selon un mode d'application particulier, le procédé conforme à l'invention est mis en oeuvre lorsque les signaux vidéo doivent être codés suivant l'un des standards PAL, SECAM, NTSC ou SVHS.

Selon un mode de réalisation particulier, dispositif mettant en oeuvre le procédé conforme à l'invention est prévu selon la définition de la revendication 6.

D'autres caractéristiques et avantages de l'invention apparaîtront à travers la description d'un mode de réalisation particulier non limitatif représenté par les figures annexées, parmi lesquelles:
la figure 1 représente deux exemples de modèles de caractères suivant un format de 12 pixels fois 18 lignes,
la figure 2 représente un diagramme fonctionnel d'un dispositif générateur de caractères mettant en oeuvre l'invention.

L'exemple de réalisation particulier décrit ci-dessous se rapporte à un signal de vidéo composite bande de base (Signal CVBS). Il est bien entendu que l'invention ne se limite pas à de tels signaux.

Les générateurs de texte sont des dispositifs couramment employés dans le domaine de la télévision. Les circuits suivants en sont des exemples: HITACHI HD49470, NEC PD6450, MITSUBISHI M50557. Dans la description qui suit, seuls les éléments propres à l'invention seront décrits de manière détaillée. Les circuits tels que, par exemple, le circuit d'insertion de texte en soi, sont de type connu.

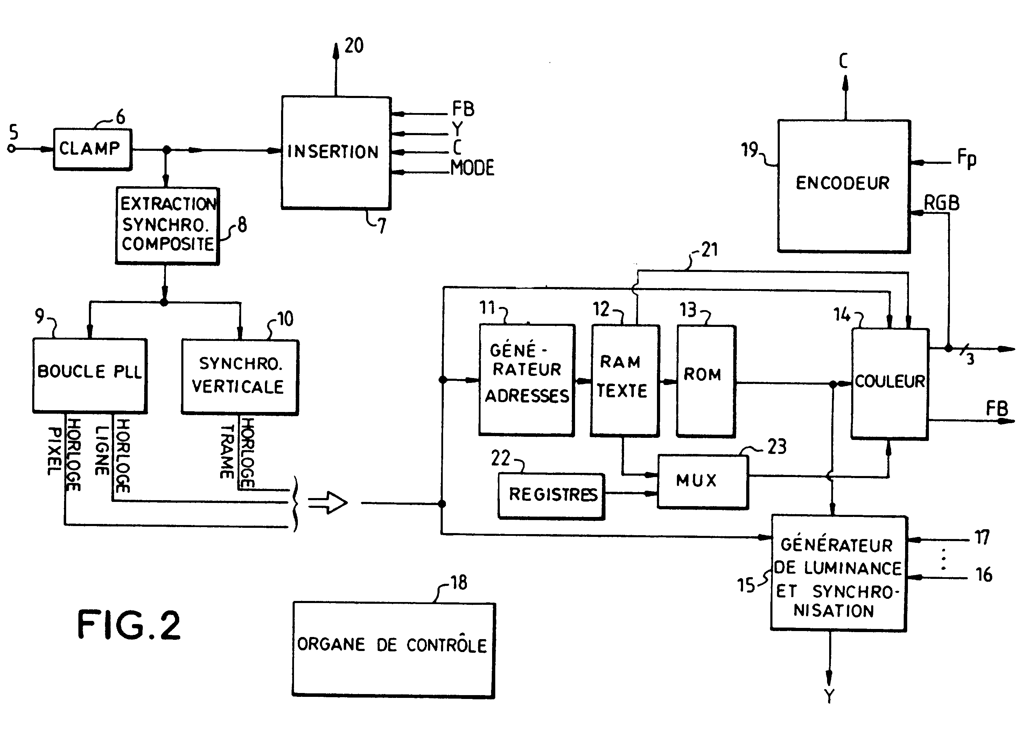

Un dispositif mettant en oeuvre le procédé conforme à l'invention et tel qu'illustré par la figure 2 comporte une borne d'entrée 5. Le signal vidéo d'entrée CVBS parvient au dispositif par cette borne. La borne 5 est reliée d'autre part à un circuit de clampage 6, qui a pour fonction de clamper le signal CBVS à une tension de référence de noir. Ce circuit de clampage comprend une capacité de clampage non représentée. Le signal clampé est fourni à un circuit d'insertion 7 dont le rôle est soit d'insérer un signal correspondant au texte à afficher dans le signal vidéo clampé, soit de remplacer ce signal par un signal élaboré entièrement par le générateur de texte. Ce signal clampé est aussi fourni à un circuit d'extraction de synchronisation composite 8, qui extrait les signaux de synchronisation ligne et trame. A partir de ces informations, une boucle à verrouillage de phase 9 ainsi qu'un séparateur de synchronisation verticale 10 élaborent une horloge trame, une horloge ligne et une horloge pixel. Ces horloges alimentent les parties appropriées du dispositif. Elles alimentent notamment un circuit générateur d'adresses 11 qui divise le plan de l'image en rectangles correspondant aux emplacements des caractères. Le circuit générateur 11 comprend des compteurs qui à partir des signaux d'horloge déterminent la position du pixel actuellement traité. A partir de l'équivalent d'un tableau de correspondance, possédant en entrée la position du pixel actuellement traité et en sortie l'emplacement du caractère correspondant, le circuit 11 fournit une adresse correspondant à cet emplacement à une RAM 12. Ladite RAM 12 stocke, par exemple sous la forme de codes ASCII, le texte à afficher. Selon l'adresse fournie par le circuit 11, cette RAM 12 fournit soit un code correspondant à un caractère, soit un code indiquant qu'il n'y a pas de texte à cet emplacement.

La RAM 12 mémorise aussi les attributs de niveau caractère. Selon le présent exemple de réalisation, il s'agit là de l'attribut de couleur de forme.

Si l'alphabet des caractères disponibles est de 128 caractères et si la taille maximale d'une page complète de texte est de 28x11 caractères, la taille de la RAM 12 devra être de 28×11 = 308 emplacements de 7 bits chacun. Le code correspondant à "pas de texte" devra être compris dans cet alphabet. Pour pouvoir choisir parmi 8 couleurs pour chaque caractère, 3 bits supplémentaires seront nécéssaires par emplacement pour coder l'attribut de couleur de forme.

A partir de l'adresse fournie par le générateur d'adresses 11, la RAM 12 fournit le code correspondant au caractère à afficher à une ROM 13 et la valeur de l'attribut couleur de forme à une logique couleur 14, cette transmission étant symbolisée par une ligne 21. La ROM 13 comporte les modèles des caractères évoqués précédemment. Si les modèles de caractères sont de 18 lignes fois 12 pixels chacun et comportent au maximum trois zones (forme, bordure, fond), cette ROM devra avoir une capacité de 128x18x12 emplacements de 2 bits.

A partir des codes des pixels issus de cette ROM 13 et correspondant au caractère à afficher, un circuit générateur de luminance et de synchronisation 15 élabore un signal de luminance Y correspondant au texte à insérer ou à afficher. Ce signal comporte une synchronisation ligne et trame, issue des signaux d'horloge du dispositif. Les lignes 16 et 17 fournissent au circuit 15 les tensions correspondant aux paliers de luminance associés aux différentes zones des modèles de caractères. Seules deux lignes sont représentées, mais il est bien entendu possible d'en prévoir plus, en fonction du nombre de zones par modèle de caractère. Selon un autre mode de réalisation, ces tensions sont fixes et fournies par des sources de tension internes au circuit 15.

Le choix des tensions correspondant aux paliers de luminance est fait de façon à ce que les caractères affichés en monochrome soient aisément identifiables. Pour un modèle de caractère comprenant par exemple deux zones, l'une de fond, l'autre de forme, on choisira, par exemple, pour le fond une tension correspondant à un gris sombre et pour la forme une tension correspondant à du blanc.

Le dispositif comprend également la logique couleur 14. Ce circuit reçoit les informations de la ROM 13. Un circuit de multiplexage 23 fournit au circuit 14 soit les attributs de caractère de la RAM 12, soit les valeurs contenues dans des registres 22 mémorisant les attributs de page. Dans le cadre de l'exemple de réalisation décrit, ces derniers sont des attributs de couleur de bordure et de fond. Selon un mode de réalisation particulier, ces deux attributs sont codés chacun sur 3 bits.

Le contenu de ces registres, ainsi que le contenu de la RAM 12 sont contrôlés de manière connue par un organe de contrôle 18. Selon un mode de réalisation particulier, l'organe de contrôle est un microprocesseur.

La logique de couleur 14 élabore d'une part des signaux RGB complets concernant le texte à afficher, d'autre part un signal d'insertion FB (Signal de "Fast Blanking"). Cette fonction d'élaboration du signal d'insertion peut être remplie par un autre circuit, mais pour la clarté du schéma, le circuit 14 se charge de cette tâche. Un encodeur 19 récupère les signaux RGB et code l'information de chrominance suivant le standard désiré (Par exemple: chrominance modulée en amplitude pour les standards PAL et NTSC, chrominance modulée en fréquence pour le standard SECAM). Ce signal de chrominance est référencé par C sur la figure. Le circuit 19 comporte une ligne d'entrée lui fournissant la fréquence de la sous-porteuse de chrominance Fp.

Les signaux de chrominance C, de luminance Y et d'insertion FB sont traîtés par le circuit d'insertion 7. L'insertion de l'information correspondant au texte est réalisée par un interrupteur à trois voies dont l'une est constamment reliée à la sortie vidéo 20 du circuit 7. L'interrupteur, commandé par le signal d'insertion FB, peut basculer entre les deux autres voies, dont l'une porte le signal vidéo clampé et l'autre le signal Y ou le signal Y sommé avec le signal C. Le circuit d'insertion 7 possède deux modes, le premier étant dit mode mixte, le second mode pleine page. Le mode mixte consiste à multiplexer le signal d'entrée avec le signal correspondant au texte (luminance et/ou chrominance). Le mode pleine page consiste à ne tenir compte que du signal de texte. Le signal d'insertion est dans ce dernier cas toujours à l'état actif. Le mode est choisi par l'intermédiaire d'une ligne MODE, contrôlée par l'organe de contrôle 18.

Le dispositif conforme à l'invention possède deux modes de fonctionnement. Le premier mode est le mode de fonctionnement connu: Dans le cadre du présent exemple, l'attribut de couleur de forme (en tant qu'attribut de niveau caractère) permet de déterminer la couleur de la forme de chacun des caractères de façon indépendante, tandis que les attributs de couleur de bordure et de fond (en tant qu'attributs de page) déterminent une fois pour toutes pour tous les caractères les couleurs de bordure et de fond. Dans ce mode de fonctionnement, le circuit de multiplexage 23 fournit au circuit de couleur les valeurs contenues dans les registres 22.

Selon le second mode de fonctionnement, l'attribut de caractère est utilisé aussi bien pour déterminer la couleur de forme que la couleur de fond et de bordure. Dans ce mode de fonctionnement, on ne tient donc pas compte des attributs mémorisés dans les registres 22. La transmission de la valeur de l'attribut de couleur de forme de la RAM 12 se fait par le circuit de multiplexage 23. Le circuit de couleur 14 tiendra compte de cette valeur comme si elle était issue des registres 22.

Selon un mode de réalisation particulier, un bit d'un registre de l'organe de contrôle 18 indique le mode de fonctionnement choisi. La valeur de ce bit peut être influencée de diverses manières. Une première solution consiste à laisser le choix à l'utilisateur par l'intermédiaire de la télécommande par exemple. Une seconde solution consiste en une mise en fonctionnement automatique selon le second mode lorsque l'on détecte, par des moyens connus, que la sortie 20 est utilisée plutôt que la sortie RGB.

Le premier mode de fonctionnement est maintenu pour ne pas réduire les capacités de coloriage du circuit lorsque le signal de sortie est directement un signal RGB, et non un signal codé suivant un standard particulier. Il est bien sûr envisageable de créer un circuit dédié uniquement à l'élaboration d'un signal codé suivant un tel standard.

Dans l'exemple décrit ci-dessus, l'attribut de couleur utilisé pour déterminer la couleur de toutes les zones d'un caractère donné est du niveau d'un attribut de caractère. Selon un exemple de réalisation supplémentaire, on restreind ce niveau à un niveau de rangée. Deux avantages apparaissent dans ce cas: d'une part, la quantité de mémoire nécéssaire pour stocker les attributs de rangée est divisée par le nombre de caractères par rangée, d'autre part, on évite les défauts de chrominance au niveau des frontières de caractères.

## Revendications

1. Procédé de codage de couleurs de caractères dans un système vidéo comprenant un générateur de caractères, les modèles de caractères comportant chacun au moins deux zones, ledit procédé étant caractérisé en ce qu'un attribut couleur choisi ayant un niveau d'attribut supérieur au niveau page est substitué aux attributs couleur de toutes les zones de tous les caractères correspondant audit niveau d'attribut, les valeurs de luminance choisies pour chacune des zones de ces caractères étant telles que, pour un caractère donné, ces zones puissent être distinguées lorsqu'elles ont la même couleur.

2. Procédé selon la revendication 1, caractérisé en ce que ledit attribut couleur choisi est l'attribut de plus haut niveau.

3. Procédé selon l'une des revendications précédentes, caractérisé en ce que ledit attribut couleur choisi est un attribut concernant la couleur de la forme des caractères, la forme étant une desdites zones.

4. Procédé selon l'une des revendications précédentes, caractérisé en ce que ledit procédé est mis en oeuvre lorsque les signaux vidéo doivent être codés suivant un standard dont la largeur de la bande passante de chrominance est telle qu'elle peut provoquer des défauts visibles de chrominance.

5. Procédé selon la revendication 4, caractérisé en ce que ledit procédé est mis en oeuvre lorsque lesdits signaux vidéo sont des signaux vidéo SVHS ou des signaux vidéo composites bande de base PAL, NTSC ou SECAM.

6. Dispositif mettant en oeuvre le procédé selon l'une des revendications précédentes, caractérisé en ce qu'il comprend
a) une RAM (12) dans laquelle on stocke un texte comprenant lesdits caractères à afficher ainsi qu'au moins les valeurs de l'attribut de couleur de plus haut niveau,
b) une ROM (13) contenant les modèles de caractères, et recevant le code d'un caractère considéré,
c) un circuit de couleur (14) élaborant un signal d'insertion (FB) et produisant un signal vidéo à composantes couleur (RBG) dudit texte à partir desdits modèles de caractères issus de ladite ROM et, pour chaque zone d'un desdits modèles considéré, à partir d'un attribut couleur associé;
d) un générateur de luminance (15) élaborant un signal de luminance (Y) correspondant à la luminance dudit texte à partir desdits modèles de caractères issus de ladite ROM et à partir de paliers de luminance associés aux différentes zones dedits modèles de caractères, de façon que les zones d'un caractère affiché en monochrome puissent être distinquées;
e) un encodeur (19) fournissant un signal de chrominance (C) à partir dudit signal vidéo à composantes couleur;
f) ainsi qu'un circuit d'insertion insérant les signaux de luminance (Y) et/ou de chrominance (C) dans un signal vidéo d'entrée ou remplaçant le signal vidéo d'entrée par la somme des signaux de luminance et de chrominance,
g) un circuit de multiplexage (23) selectionnant, pour chaque zone desdits modèles de caractères considéré par le circuit de couleur, l'attribut couleur associé et fournissant cet attribut couleur au circuit de couleur, le circuit de multiplexage ayant un mode de fonctionnement permettant de fournir au circuit de couleur le même dit attribut couleur choisi pour chacune des zones d'un modèle de caractère considéré .

## Patentansprüche

1. Verfahren zur Kodierung der Farben von Textzeichen in einem Videosystem mit einem Textzeichen-Generator, wobei jedes Textzeichenmodell wenigstens zwei Zonen enthält, dadurch gekennzeichnet, daß ein gewähltes Farb-Attribut mit einem Attributwert oberhalb des Zeilenwertes an die Stelle der Farb-Attribute aller Zonen aller Textzeichen gesetzt wird, die diesem Attributwert entsprechen, daß die für jede Zone dieser Textzeichen gewählten Luminanzwerte derart sind, daß für ein bestimmtes Textzeichen die Zonen unterscheidbar sind, wenn sie dieselbe Farbe aufweisen.

2. Verfahren nach Anspruch 1,
dadurch gekennzeichnet, daß das gewählte Farb-Attribut das Attribut mit dem höchsten Wert ist.

3. Verfahren nach einem der vorangehenden Ansprüche,
dadurch gekennzeichnet, daß das gewählte Farb-Attribut ein Attribut ist, das die Farbe des Textzeichen-Vordergrunds betrifft, wobei die Form eine der genannten Zonen ist.

4. Verfahren nach einem der vorangehenden Ansprüche,
dadurch gekennzeichnet, daß das Verfahren angewendet wird, wenn die Videosignale gemäß einer Norm kodiert werden müssen, deren Chrominanz-Durchlaßbandbreite so ist, daß sichtbare Chrominanzfehler auftreten können.

5. Verfahren nach Anspruch 4,
dadurch gekennzeichnet, daß das Verfahren angewendet wird, wenn die Videosignale SVHS-Videosignale oder zusammengesetzte Basisband-Videosignale nach PAL, NTSC oder SECAM sind.

6. Vorrichtung zur Durchführung des Verfahrens nach einem der vorangehenden Ansprüche, gekennzeichnet durch folgende Merkmale:
a) ein RAM (12), in dem ein Text, der die wiederzugebenden Textzeichen enthält, sowie wenigstens die Werte des Farb-Attributs mit dem höchsten Wert gespeichert werden,
b) ein ROM (13), das die Textzeichenmodelle enthält und den Kode eines betrachteten Textzeichens empfängt,
c) eine Farbschaltung (14) zum Liefern eines Einfügesignals (FB) und zum Erzeugen eines Videosignals mit Farbkomponenten (RGB) des Textes aus den von dem ROM ausgegebenen Textzeichenmodellen und, für jede Zone eines der betrachteten Modelle, aus einem zugehörigen Farb-Attribut,
d) einen Luminanzgenerator (15) zum Liefern eines Luminanzsignals (Y), das der Luminanz des Textes von dem Textzeichen-Modellausgang des ROM und von den Luminanz-Schwellwerten entspricht, die verschiedenen Zonen der Textzeichenmodelle zugeordnet sind, derart, daß die Zonen eines monochrom wiedergegebenen Textzeichens visuell unterscheidbar sind,
e) einen Koder (19) zum Erzeugen eines Chrominanzsignals (C) aus dem Videosignal mit Farbkomponenten, und
f) eine Einfügeschaltung zum Einfügen der Luminanz (Y) und/oder der Chrominanz (C)-Signale in ein Eingangs-Videosignal oder zum Ersetzen dieses Eingangs-Videosignals durch die Summe des Luminanz- und des Chrominanzsignals,
g) eine Multiplexschaltung (23), die für jede Zone der durch die Farbschaltung betrachteten Textzeichenmodelle das zugehörige Farb-Attribut auswählt und dieses Farb-Attribut zu der Farbschaltung liefert, wobei die Multiplexschaltung einen Verarbeitungsmodus zum Versorgen der Farbschaltung mit demselben ausgewählten Farb-Attribut für alle Zonen des betrachteten Textzeichenmodells enthält.

## Claims

1. Process for coding the colors of characters in a video system, which includes a character generator making use of character models each comprising at least two zones, said process being characterized in that a chosen color attribute having an attribute level higher than page level is substituted for color attributes of all the zones of all the characters corresponding to said attribute level, the luminance values chosen for each zones of these characters being such that, for a given character, these zones can be visually distinguished when they are of the same color.

2. Process according to claim 1, characterized in that said chosen color attribute is an attribute of the highest level.

3. Process according to one of the preceding claims , characterized in that said chosen color attribute is an attribute defining the color of the character foreground, the foreground being one of said zones.

4. Process according to one of the preceding claims, characterized in that said process is applied when video signals must be coded according to a standard whose chrominance pass-band width is such that visible chrominance defects may occur.

5. Process according to claim 4, characterized in that said process is applied when said video signals are SVHS video signals or PAL, NTSC or SECAM composite video base-band signals.

6. Device making use of the process according to one of the preceding claims, characterized in that it comprises :
a) a RAM (12) for storing a text comprising said characters to be displayed with at least values of the color attribute of highest level;
b) a ROM (13) including the character models and receiving the code of a given character;
c) a color circuit (14) generating an insertion signal (FB) and producing a video signal with color components (RGB) of said text from said character models output from said ROM and, for each zone of one given model, from an associated color attribute;
d) a luminance generator (15) generating a luminance signal (Y) corresponding to luminance of said text from said character models output from said ROM and from luminance thresholds associated to different zones of said character models, in order that the zones of a character displayed in monochrome can be visually distinguished;
e) a coder (19) generating a chrominance signal (C) from said video signal with color components; and
f) an insertion circuit inserting the luminance (Y) and/or chrominance (C) signals into an input video signal or replacing this input video signal by the sum of the luminance and chrominance signals;
g) a multiplex circuit (23) selecting for each zone of said character models considered by the color circuit, the associated color attribute and providing this color attribute to the color circuit, the multiplex circuit having a processing mode for providing said color circuit with the same said chosen color attribute for each zones of a considered character model.
